# EUROPEAN PATENT APPLICATION

(11) **EP 1 413 502 A2**
(43) Date of publication of application: **28.04.2004**
(21) Application number: 03255985.8
(22) Date of filing: 23.09.2003
(51) Int. Cl.: B62D 29/00

(54) **Structural reinforcement assembly and a method for structurally reinforcing a member or a portion of an article of manufacture**

(30) Priority: 01.10.2002 US 262493
(71) Applicant: Henkel Kommanditgesellschaft auf Aktien, 40589 Düsseldorf (DE)
(72) Inventor: Wychech, Joseph S., Grosse Pointe Shores, Michigan 48236 (US)
(74) Representative: W.P. Thompson & Co.

(57) **Abstract**

An assembly 12 and a method which utilizes the assembly 12 to selectively and structurally strengthen and rigidize and/or stiffen a member 10 which is operatively disposed within an article of manufacture, such as an without limitation, a vehicle. Particularly, the assembly 12 includes a selectively expandable portion 18 which is inserted into the member 10 and selectively expanded once it is inserted into the member 10.

## Description

### Field of the Invention

The present invention generally relates to a structural reinforcement assembly and to a method for structurally reinforcing a member or a portion of an article of manufacture and more particularly, to an assembly which may be selectively inserted into a space and which may be selectively expanded in a manner which is effective to fill such space, and to a method which utilizes such an assembly.

### Background of the Invention

An assembly, such as but not limited to an automobile, includes several members which form the structure of the assembly. One non-limiting example of such a structural member includes but is not limited to a pillar of an automobile.

In order to reduce cost, these structural members are typically hollow and contain one or more reinforcement beams, such as an "I" beam. While these reinforcement beams do provide support and rigidity to these structural members, such support and rigidity is often lost or undesirably impaired when a repair is made to the assembly. That is, oftentimes such a repair (e.g., a repair to the body of the automobile after a collision) necessitates the removal of one or more of these structural members, thereby undesirably reducing the rigidity, stiffness, and overall structural integrity of the structural members of the assembly. Such a reduction in overall rigidity, stiffness, and integrity reduces the protection provided by the assembly and increases the amount of damage done to the assembly in the event of another collision.

There is therefore a need for an apparatus and a method to selectively provided increased rigidity, stiffness, and integrity to a structural member, such as and without limitation, a structural member which is found within an automobile.

### Summary of the Invention

It is a first non-limiting advantage of the invention to provide a method and an apparatus for selectively rigidizing a structural support member.

It is a second non-limiting advantage of the present invention to provide a method and an apparatus for selectively rigidizing a structural support member in a cost effective and relatively simple manner.

It is a first non-limiting feature of the present invention to provide a structural reinforcement assembly for supporting a member having a cavity of a certain volume. Particularly, the assembly comprises: a first selectively expanded portion; and a second portion which is attached to the first selectively expanded portion and which selectively communicates a gas into the first portion, effective to selectively expand the first portion, thereby occupying at least a portion of the certain volume.

It is a second non-limiting feature of the present invention to provide a structural reinforcement assembly. Particularly, the assembly comprises a selectively expandable balloon assembly; and a second portion which is selectively and removably coupled to the balloon assembly and which is effective to selectively expand said balloon.

It is a third non-limiting feature of the present invention to provide a method for structurally reinforcing a member. Particularly, the method comprises the steps of: placing at least one selectively expandable portion into the member; and expanding the at least one selectively expandable portion in a controlled manner.

These and other features and advantages of the present invention will become apparent from a reading of the detailed description of the preferred embodiment of the invention and by reference to the following drawings.

### Brief Description of the Drawings

Figure 1 is a partial perspective view of a structural support member receiving a structural support assembly which is made in accordance with the teachings of the preferred embodiment of the invention;
Figure 2 is a partial perspective view of a structural support member having received the structural support assembly which is shown in Figure 1;
Figure 3 is partial side view of the structural support member which is shown in Figures 1 and 2 and further showing the selective inflation of the received support assembly which is made in accordance with the teachings of the preferred embodiment of the invention;
Figure 4 is a view which is similar to that which is shown in Figure 3 but which shows a complete inflation of the support assembly which is made in accordance with the teachings of the preferred embodiment of the invention;
Figure 5 is a view which is similar to that which is shown in Figure 4 but which shows the selective removal of the source of gas which is used to selectively inflate the support assembly which is made in accordance with the teachings of the preferred embodiment of the invention;
Figure 6 is a perspective view of the support assembly which is shown in Figure 5;
Figure 7 is a partial perspective view of a support member having the support assembly which is made in accordance with the teachings of the preferred embodiment of the invention but deployed within the support member in an alternate manner;
Figure 8 is a partial perspective view of a support member having a support assembly which is made in accordance with the teachings of an alternate embodiment of the invention;
Figure 9 is a perspective view of a support member having a support assembly which is made in accordance with the teachings of yet another alternate embodiment of the invention;
Figure 10 is a perspective view of a support member having a support assembly which is made in accordance with the teachings of yet another alternate embodiment of the invention;
Figure 11 is a perspective view of a support member having a support assembly which is made in accordance with the teachings of yet another alternate embodiment of the invention; and
Figure 12 is a perspective view of a support member having a support assembly which is made in accordance with the teachings of yet another alternate embodiment of the invention.

### Detailed Description of the Preferred Embodiment of the Invention

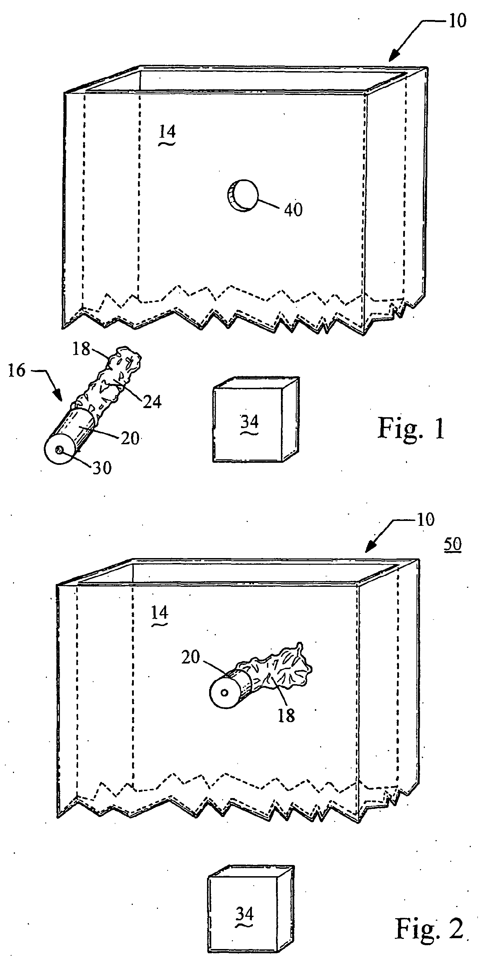

Referring now to Figures 1-5 there is shown a structural support member 10 in combination with a structural support assembly 12 which is made in accordance with the teachings of the preferred embodiment of the invention.

Particularly, the structural support member 10 has a cavity 14 which may be formed due to the removal of all or part of a support beam or member, such as and without limitation, an "I" beam. As is further shown, the assembly 12 includes a selectively inflatable balloon member 16 having a selectively inflatable portion 18 and a nozzle 20 which is communicatively coupled to and/or which may be integrally formed with the selectively inflatable portion 18. Particularly, the selectively inflatable portion 18 includes or forms a cavity 24 which communicates with the opening 30 formed within the nozzle 20. In one non-limiting embodiment of the invention, the assembly 12 includes an air pump 34, although in another non-limiting embodiment, the assembly 12 only comprises the inflatable balloon member or assembly 16. Further, in one non-limiting embodiment of the invention, the selectively inflatable portion 18 is formed from rubber or some other commercially available elastomeric material and the selectively inflatable portion has a uniform thickness and a substantially uniform elasticity along each point on its surface.

In the first step in the method of utilizing the assembly 12, as shown best in Figure 1, a hole or opening 40 is formed within the member 10, effective to allow communication with the cavity 14. In the second step of the methodology of the preferred embodiment of the invention, the selectively inflatable portion 18 is inserted into the cavity 14 through the formed hole or opening 40 such that the nozzle 20 is made to protrude from the formed hole or opening 40 into the ambient environment 50 in which the structural support member 10 resides.

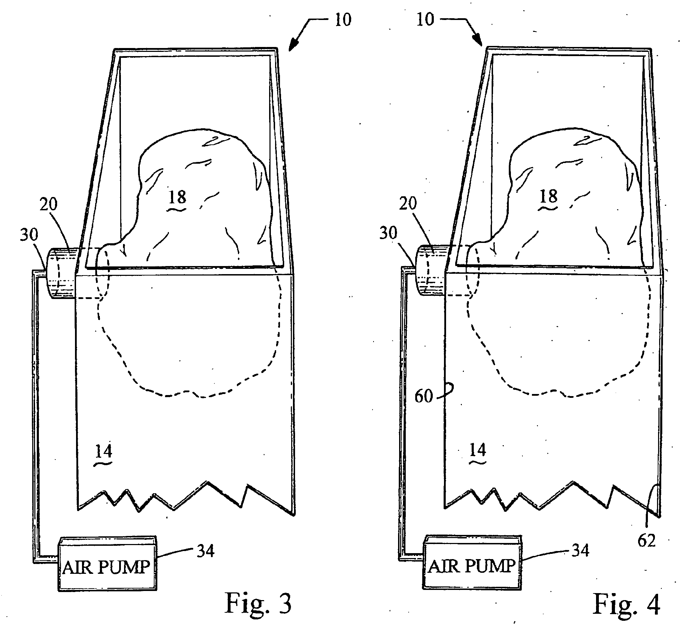

In the third step of the methodology of the preferred embodiment of the invention, as best shown in Figure 3, the air pump 34 is operatively coupled to the protruding nozzle 20. Air is then communicated into the cavity 24, through the opening 30, by the air pump 34, effective to begin to cause the selectively inflatable portion 18 to inflate within the cavity 14. In the preferred embodiment of the invention, the selectively inflatable portion 18 uniformly inflates within the cavity 14. That is, the term "uniformly inflates" means that each point on the surface of the selectively inflatable portion 18 moves or attempt to move in substantially the same distance within the cavity 14.

In other non-limiting embodiments of the invention, portion 18 may be inflated or filled in a non-uniform manner (e.g., a first section of portion 18 is inflated more fully than a second portion 18).

In the fourth step of the methodology of the preferred embodiment of the invention, as shown best in Figure 4, the selectively inflatable portion 18 is either fully inflated or is inflated by a desired amount within the cavity 14. In the most preferred embodiment of the invention, the selectively inflatable portion 18 is inflated to the fullest possible amount without breaking the portion 18. Importantly, due to the substantially uniform nature of the inflation of the selectively inflatable portion 18, upon completion of this fourth step, the selectively inflated portion 18 positively contacts at least two opposed interior walls, such as walls 60, 62, thereby rigidizing the structural support member 10 in a direction passing through each of the walls 60, 62. If it is desired to rigidize the structural support member 10 along a different direction, different opposed interior walls might need to be contacted by the selectively inflatable portion 18, thereby requiring a placement of the portion 18 to be different from that which is shown in Figures 1-6. That is, the portion 18 might need to actually touch the bottom of the member 10 which is not shown in the Figures 1-5 since the member 10 has been sectionalized in the bottom portion or area.

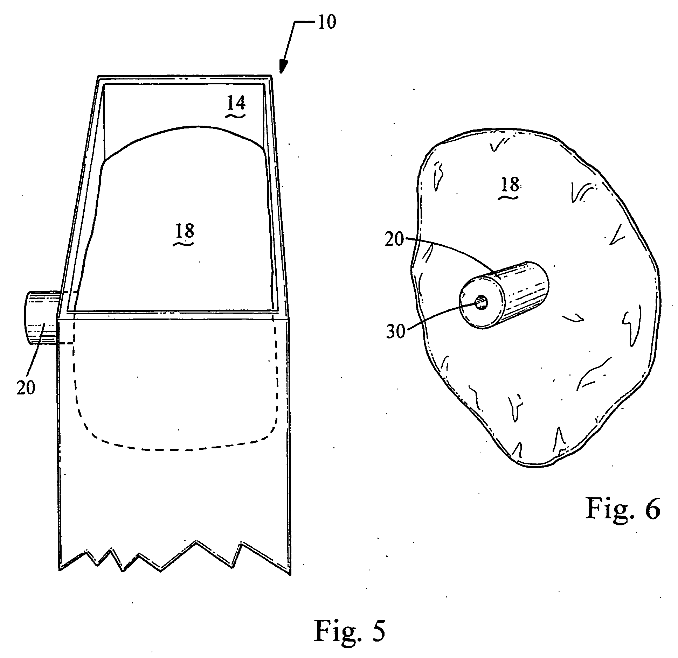

The fifth step of the methodology of the preferred embodiment of the invention, as best shown in Figure 5, requires the removal of the air pump 34 from the portion 20, thereby leaving the selectively inflatable portion operatively and inflatably disposed within the cavity 14 in a manner which is effective to rigidize and structurally strengthen the member 10. It should be appreciated that the air pump 34 may be selectively replaced by a source of carbon dioxide or another gas which may be selectively communicated into the cavity 24 and that the selectively inflatable portion 18 may be adapted to achieve substantially any desired shape and size. In one non-limiting embodiment, the air pump 34 may be replaced by an industrial foam pump. That is, in this non-limiting embodiment, an industrial foam, acoustical foam, or structural foam, such as Terocore™ or Betocore™ may be selectively injected within the inflatable portion 18, thereby utilizing the inflatable portion 18 to operatively contain the foam while concomitantly preventing the foam from expanding, traversing, or running into unwanted or undesirable areas.

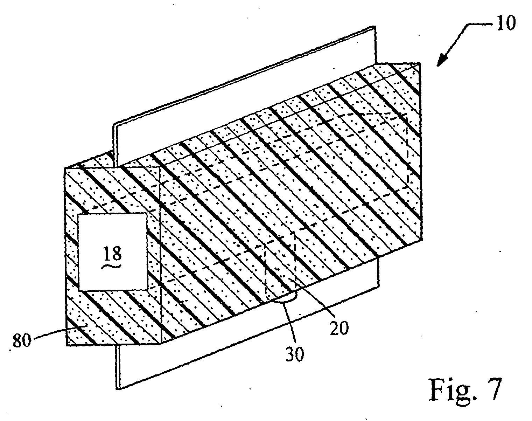

In an alternate embodiment of the invention, as shown best in Figure 7, foam 80 is placed within the cavity 14 after the selectively inflatable portion 18 is inserted into the cavity 14 and selectively inflated, thereby cavitating or occupying a portion of the cavity 14 (e.g., approximately one-third to about one-half of the volume of cavity 14 is occupied by the inflatable portion 18). It should be appreciated that, in this manner, the foam 80 is injected into cavity 14 and the foam 80 surrounds the inflated portion 18. That is, inflated portion 18 acts to define an area in which foam 80 is displaced or prevented from occupying within the cavity 14, thereby reducing the amount of foam 80 which is needed to "fill" cavity 14.

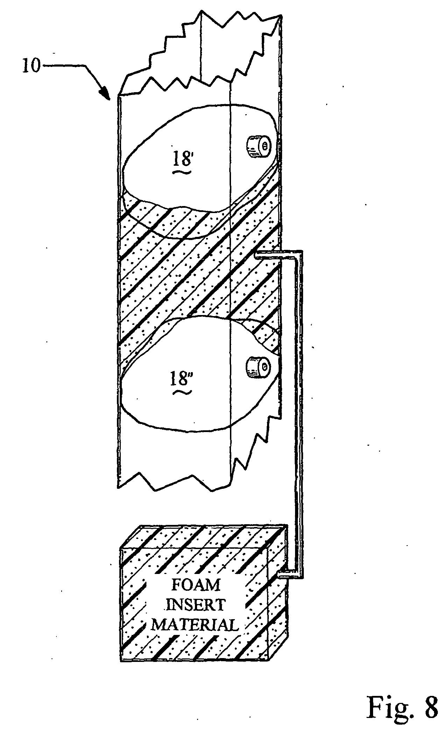

In yet another alternate embodiment of the invention, as shown best in Figure 8, two or more substantially identical portions 18 (denoted as 18' and 18'' in Figure 8) are selectively inserted and inflated within the cavity 14 and foam material 90 is inserted, after the portions 18' and 18'' are inserted into and selectively inflated within the cavity 14. It should be appreciated that the material 90 and 80 may alternatively comprise foam based material or some other commercially available material.

Furthermore, in this alternate embodiment of the invention, also as best shown in Figure 8, one portion 18' is operatively disposed within a desired area of cavity 14 and either inflated with air or another gas, as discussed above. Furthermore, a second and substantially identical portion 18'' is disposed within the same cavity 14 at a predetermined distance apart from portion 18' (i.e., allowing a predetermined space of cavity 14 between the two portions 18' and 18'') and filled with air or gas in the same manner as discussed above in reference to portion 18'. Moreover, the foam 90 is inserted within the predetermined space of cavity 14 created by the portions 18' and 18''. In this manner, the portions 18' and 18'' cooperatively act as barriers to contain the foam 90. It should be appreciated that, in this manner, the portions 18' and 18'' locate and contain the foam during cure, thereby concomitantly reducing the amount of required material or foam 90.

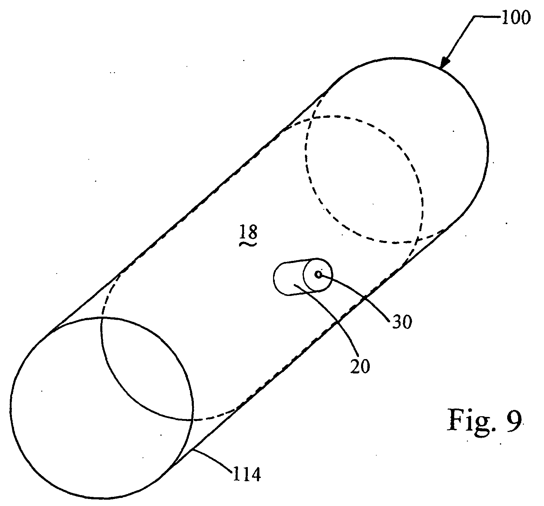

It should be understood that the cavity 14 is not limited to the geometrical configuration (i.e., generally rectangular) which is shown in Figures 1-5 and 7-8. Rather, as should be appreciated, the geometrical configuration of cavity 14 may be substantially any geometrical configuration. For example and without limitation and, as shown in Figure 9, the applications of the present invention are equally applicable to a substantially round or tubular member, such as member 114. In one non-limiting embodiment, member 114 is a portion of a conventional vehicular driveshaft or a conventional vehicular steering column. It should be appreciated that other geometrical configurations or other tubular members or portions may also be supported using the abovementioned embodiments of the invention, and nothing in this description is meant to limit the shape, size, and geometrical configuration of cavities 14, 114 to that which is illustrated within Figures 1-5 and 7-9.

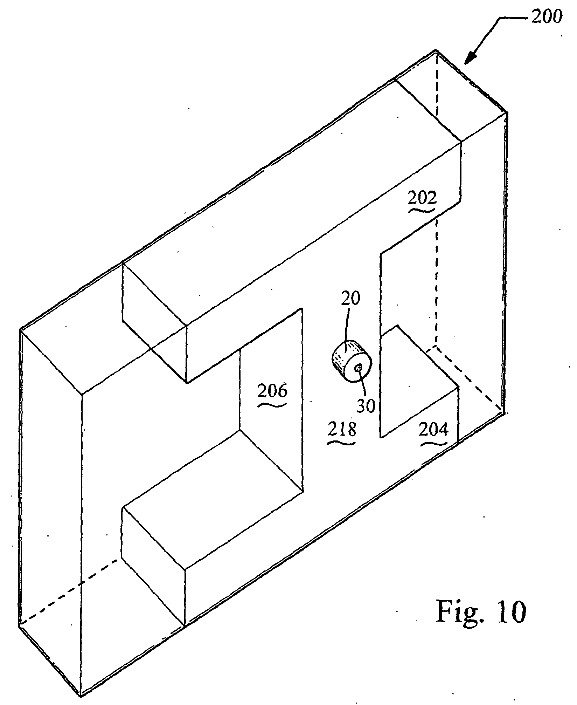

Referring now to Figure 10, there is shown a structurally supported member 200 which is made in accordance with the teachings of an alternate embodiment of the invention. As shown, member 200 includes a generally hollow and rectangular member 114 into which a selectively inflatable portion 218 is inserted (i.e., in the manner which is described in reference to Figures 1-5). It should be appreciated that, in this alternate embodiment, the selectively inflatable portion 218 is geometrically configured to be generally "I" or "H" shaped. That is, inflatable portion 218 includes a first portion 202 and a second portion 204 which is parallel to the first portion (e.g., the top and bottom portions of the letter "I"). Moreover, inflatable portion 218 includes a third portion 206 which separates the first and second portions 202, 204 and which is perpendicular to and intersects the first and second portions 202, 204 (e.g., the middle portion of the letter "I"). In this alternate embodiment, the selectively inflatable portion 218 may either be filled or selectively inflated with air, another type of gas, or foam. In this manner the selectively inflatable portion 218 may also act as a containment bladder for a foam, thereby providing member 200 with structural support and/or acoustical dampening while concomitantly containing and conserving the amount of material (e.g., foam) which would otherwise be required to fill the entire hollow area of member 200. It should be understood that nothing in this description is meant to limit the geometrical configuration of the member 200 to that which is shown within Figure 10. Rather, as discussed above, substantially any desired geometrical configuration may be structurally supported by the selectively inflatable member 218.

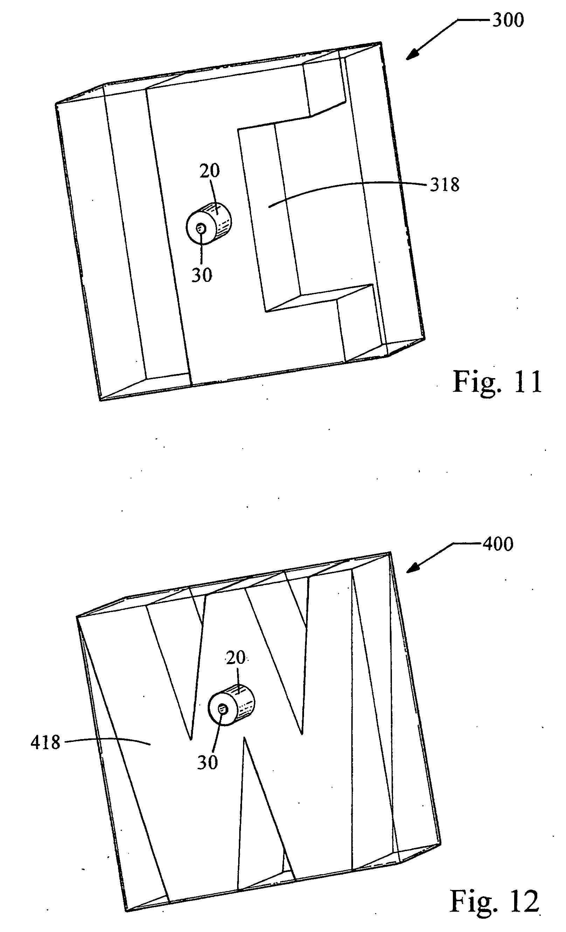

Referring now to Figure 11 there is shown a structurally supported member 300 which is made in accordance with the teachings of yet another alternate embodiment of the invention. As shown, member 300 is substantially identical to the member 200 of Figure 10. However, as shown in Figure 11, the selectively inflatable portion 318 is geometrically configured to be shaped substantially similar to the letter "C" or "U" (i.e. , the portion 318 includes two substantially identical and parallel members (the top and bottom portions of the letter "C"), as well as a perpendicular portion which separates the top and bottom parallel portions (the left and middle portion of the letter "C"). In this alternate embodiment, the selectively inflatable portion 318 may either be filled or selectively inflated with air, another type of gas, or foam. In this manner, the selectively inflatable portion 318 may also act as a containment bladder for foam, thereby providing member 300 with structural support and/or acoustical dampening while concomitantly containing and conserving the amount of material (e.g., foam) which would otherwise be required to fill the entire hollow area of member 300. It should be understood that nothing in this description is meant to limit the geometrical configuration of the member 300 to that which is shown within Figure 11. Rather, as discussed above, substantially any desired geometrical configuration may be structurally supported by the selectively inflatable member 318.

Referring now to Figure 12, there is shown a structurally supported member 400 which is made in accordance with the teachings of yet another alternate embodiment of the invention. As shown, member 400 is substantially identical to the members 200 and 300 of Figures 10 and 11. However, as shown in Figure 12, the selectively inflatable portion 418 is geometrically configured to be shaped substantially similar to the letter "W" or "M". In this alternate embodiment, the selectively inflatable portion 418 may either be filled or selectively inflated with air, another type of gas, or foam. In this manner, the selectively inflatable portion 418 may also act as a containment bladder for foam, thereby providing member 400 with structural support and/or acoustical dampening while concomitantly containing and conserving the amount of material (e.g., foam) which would otherwise be required to fill the entire hollow area of member 400. It should be understood that nothing in this description is meant to limit the geometrical configuration of the member 400 to that which is shown within Figure 12. Rather, as discussed above, substantially any desired geometrical configuration may be structurally supported by the selectively inflatable member 418.

It should be understood that nothing in the above description is meant to limit the geometrical configurations of the selectively inflatable portions 18, 218, 318, and 418 to the shapes which are described and shown in figures 9-12. Rather, substantially any desired geometrical configuration of an inflatable portion may be substituted in the place of that which is shown in Figures 9-12. Further, it should be understood that the geometrical configurations of the selectively inflatable portions may be designed or produced to administer a predetermined amount of support and/or dampening characteristics. Moreover, it should be appreciated that these shapes or geometrical configurations may be used to provide support in discrete locations, while providing clearances for fasteners, pins, tooling apertures or holes, and the like. That is, a particular inflatable portion 18, 218, 318, or 418 may be utilized to ensure there is sufficient space for additional members, structures, or portions to be placed through within a cavity 14 containing the inflatable portion 18, 218, 318, or 418.

It is to be understood that the present invention is not limited to the exact construction or method which has been illustrated and described above, but that various modifications may be made without departing from the spirit and the scope of the inventions as are delineated in the following claims.

## Claims

1. A structural reinforcement assembly comprising:
a selectively expandable balloon assembly; and
a second portion which is selectively and removably coupled to said balloon assembly and which is effective to selectively expand said balloon.

2. The structural reinforcement assembly of claim 1 wherein said balloon assembly comprises:
a balloon; and
a nozzle.

3. The structural reinforcement assembly of claim 2 wherein said nozzle is integrally formed with said balloon.

4. The structural reinforcement assembly of any one of claims 1 to 3 wherein said second portion comprises a source of gas which is selectively coupled to said balloon assembly to inject an amount of gas into said balloon.

5. A structural reinforcement assembly for supporting a member having a cavity of a certain volume, said assembly comprising:
a first selectively expanded portion; and
a second portion which is attached to said first selectively expanded portion and which selectively communicates a gas into said first portion, effective to selectively expand said first portion, thereby occupying at least a portion of said certain volume.

6. The structural reinforcement assembly of claim 4 or claim 5 wherein said first selectively expanded portion, or said balloon, is formed from an elastomeric material, such as rubber.

7. The structural reinforcement assembly of claim 5 or claim 6 wherein said member has a pair of opposing surfaces which define said cavity, said selective expansion of said first portion causing said first portion to abut each of said pair of opposing surfaces.

8. The structural reinforcement assembly of any one of claims 4 to 7 wherein said gas comprises air or carbon dioxide.

9. The structural reinforcement assembly of any one of claims 5 to 8 wherein said second portion comprises a nozzle.

10. The structural reinforcement assembly of claim 9 wherein said second portion comprises a source of foam which is selectively coupled to said balloon assembly or first selectively expanded portion to inject an amount of foam into said balloon, or said first selectively expanded portion.

11. The structural reinforcement assembly of claim 10 wherein said foam further comprises acoustic foam or structural foam.

12. The structural reinforcement assembly of claim 10 further including a source of foam, said source of foam being effective to selectively deposit said foam around said balloon, or said first selectively expanded portion.

13. The structural reinforcement assembly of claim 12 wherein said source of foam comprises a source of structural foam or of acoustic foam.

14. The structural reinforcement assembly of any one of claims 1 to 13 wherein said balloon or said first selectively expanded portion is I-shaped, U-shaped or M-shaped.

15. A method for structurally reinforcing a member comprising the steps of:
placing at least one selectively expandable portion into said member; and
expanding said at least one selectively expandable portion in a controlled manner.

16. The method of claim 15 wherein said method further comprises the steps of:
acquiring a certain material; and
placing said certain material into said member, thereby allowing said certain material to cooperate with said at least one selectively expandable portion to reinforce said member.

17. The method of claim 16 wherein said certain material comprises foam.

18. The method of claim 16 wherein said certain material comprises Terocore ™ or Betocore™

19. The method of any one of claims 15 to 18 wherein said step of expanding said at least one selectively expandable portion comprises the steps of:
acquiring a source of gas;
coupling said source of gas to said at least one selectively expandable member; and
communicating an amount of gas into said at least once selectively expandable portion.

20. The method of claim 19 wherein said gas comprises air or carbon dioxide.

21. The method of any one of claims 15 to 20 wherein said expandable member is I-shaped, U-shaped or M-shaped.

22. The method of any one of claims 15 to 21 further comprising the steps of:
providing a second selectively expandable portion;
placing said second selectively expandable portion within said member at a certain distance from said at least one selectively expandable portion; and
communicating said gas, from said source of gas, to said second selectively expandable member, wherein said second selectively expandable portion cooperates with said at least one selectively expandable portion to contain said certain material.
